# EUROPEAN PATENT SPECIFICATION

(11) **EP 4 526 012 B1**
(45) Date of publication and mention of the grant of the patent: **18.02.2026**
(21) Application number: 23726483.3
(22) Date of filing: 12.05.2023
(51) Int. Cl.: B01D 46/00, B01D 46/24

(54) **FILTER SYSTEM AND FILTER ELEMENT**
FILTERSYSTEM UND FILTERELEMENT
SYSTÈME DE FILTRE ET ÉLÉMENT DE FILTRE

(30) Priority: 18.05.2022 EP 22173943
(43) Date of publication of application: 26.03.2025
(73) Proprietor: MANN+HUMMEL GmbH, 71636 Ludwigsburg (DE)
(72) Inventor: HASENFRATZ, Robert, 74523 Schwäbisch Hall (DE); NEEF, Pascal, 78647 Trossingen (DE); RUHLAND, Klaus-Dieter, 67149 Meckenheim (DE); SAWATZKY, Peter, 67354 Römerberg (DE); SCHILLING, Marco, 67354 Römerberg (DE)
(74) Representative: Mann + Hummel Intellectual Property
(86) International application number: PCT/EP2023/062701
(87) International publication number: WO 2023/222525

(56) References cited:
- EP-A1- 2 851 110
- WO-A1-2021/164886
- US-A1- 2012 067 014
- US-A1- 2021 069 631

## Description

### Technical Field

The invention relates to a filter system comprising a housing with a fluid inlet and a fluid outlet and a filter element being accommodated in the housing along an axial direction for filtering a fluid flowing from the fluid inlet to the fluid outlet, in particular for air filter applications, and to a filter element comprising a filter bellows.

### Prior Art

WO 2020/014141 A1 discloses a filtration system comprising a housing having a first housing end and a second housing end. The housing defines a central compartment therein. The housing includes an alignment tab disposed on the second housing end. The alignment tab protrudes from the second housing end towards the first housing end. A filter element is positioned within the housing. The filter element includes a first end cap, a second end cap, and filter media positioned between and extending axially between the first end cap and the second end cap. The filter media defines a central opening extending axially therein. An alignment notch is disposed on the second end cap, the alignment notch protruding from the second end cap toward the first end cap.

US 9,718,019 B2 discloses an air cleaner arrangement which comprises an air cleaner housing and a serviceable air filter cartridge. The air cleaner housing includes an air flow inlet arrangement and an air flow outlet arrangement. The air cleaner housing defines a housing interior and comprises a housing body and an access cover. A projection/receiver arrangement including first and second members is provided. One member of the projection/receiver arrangement is positioned on the access cover. Another member of the projection/receiver arrangement is positioned on the outer end surface of an end cap of the filter cartridge. It is engageable with the access cover, in a defined manner. In general, the first and second members of the projection/receiver arrangement are engaged to provide cantilevered support of the air filter cartridge at the second end. The first and second members of the projection/receiver arrangement are also engaged in a non-rotatable manner.

EP 2 851 110 A1 discloses a filter element covering a filter body with a longitudinal axis (L), a first end plate arranged on one end face and open or closed, and a second end plate arranged on the opposite end face, wherein the second end plate has a coupling element which, when installed in a receiving housing, cooperates with a flow guide element attached to a cover of the housing, whereby the filter element can be guided axially. A filter system for the replaceable installation of such a filter element is also disclosed.

US 2012/067014 A1 discloses filter assembly systems that utilize replaceable filter elements. The filter elements may include a ramp or sleeve for redirecting air intake when the filter elements are installed in the filter assembly systems and air is drawn into the systems. The filter elements and assembly systems may utilize co-acting components that mate with each other to at least one of: a) orient and permit mounting of the filter element in the systems; and b) permit mounting of only an authorized filter element in the systems.

US 2021/069631 A1 discloses a filter element for a filter system for filtering a fluid and has a filter bellows arranged about a longitudinal axis and enclosing an interior of the filter element. A closed end disk is arranged at a first end of the filter element and closes off the interior of the filter element. An end disk with an opening to the interior of the filter element is arranged at a second end of the filter element oppositely positioned to the first end viewed in direction of the longitudinal axis. The closed end disk has a hollow pin projecting into the interior of the filter element in direction of the longitudinal axis. The filter system has a housing for receiving the exchangeable filter element with a housing part closable by a cover. The hollow pin of the closed end disk can be pushed onto a pin of the housing part.

WO 2021/164886 A1 discloses an air filter element comprising a first end and a second end located opposite to the first end in relation to a longitudinal direction of the air filter element. The air filter element is configured for axial insertion into a filter housing with the first end leading the axial insertion. The air filter element comprises a gripping structure at the second end, the gripping structure comprising an external surface accessible for interaction by a tool to facilitate removal of the air filter element from the filter housing.

The gripping structure is also configured to, during insertion of the air filter element into the filter housing, radially align the air filter element in the filter housing.

### Disclosure of the Invention

It is an object of the invention to provide a filter system with a cost-effective provision of variants.

It is a further object of the invention to provide a filter element for such a filter system with a cost-effective provision of variants.

The aforementioned object is achieved according to one aspect of the invention by a filter system comprising a housing with a fluid inlet and a fluid outlet and a filter element being accommodated in the housing along an axial direction for filtering a fluid flowing from the fluid inlet to the fluid outlet, the filter element comprising a filter bellows with a first end face and along the axial direction an opposite second end face, wherein at least one of the end faces comprises an end cap, wherein a recess is arranged on an outside of the first end face in at least the at least one end cap, the recess extending in the axial direction, wherein at least one coding element is arranged on a circumference of the at least one end cap, wherein at least one coding pin is arranged on an inside of a bottom housing part of the housing, the coding pin being configured for cooperating with the recess when the filter element is inserted in the housing, wherein the bottom housing part comprises a circular shield in a coaxial arrangement with the filter element, the shield comprising a slot extending in the axial direction, wherein the slot is configured to receive the coding element of the filter element when the filter element is inserted in the housing, wherein, with respect to the axial direction each, a first angle between an angular position of the coding element of the filter element and an angular position of the recess matches a second angle between an angular position of the slot of the bottom housing part and an angular position of the coding pin.

The further object is achieved according to a further aspect of the invention by a filter element comprising a filter bellows with a first end face and along an axial direction an opposite second end face, wherein at least one of the end faces comprises an open end cap. The filter element is adapted to be used in a filter system according to the first aspect of the invention. A recess is arranged on an outside of the first end face in at least the at least one end cap, the recess extending in the axial direction, for cooperating with a coding pin of a housing of a filter system in an intended use. At least one coding element is arranged at an outer circumference of the at least one end cap, for cooperating with a slot of a circular shield of a bottom housing part of a filter system in an intended use, wherein, with respect to the axial direction each, a first angle between an angular position of the coding element of the filter element and an angular position of the recess matches a second angle between an angular position of the slot of the bottom housing part and an angular position of a coding pin of the filter system. The coding element is arranged with a, preferably predetermined, spacing along the axial direction from the first end face. The coding element can in particular have a total extension in the axial direction that is significantly smaller than an extension of the filter bellows along the axial direction.

Advantageous embodiments and advantages of the invention are described in the further claims, the description, and the drawings.

According to a first aspect of the invention, a filter system is proposed, comprising a housing with a fluid inlet and a fluid outlet and a filter element being accommodated in the housing along an axial direction for filtering a fluid flowing from the fluid inlet to the fluid outlet. The filter element comprises a filter bellows with a first end face and along the axial direction an opposite second end face, wherein at least one of the end faces comprises an end cap. A recess is arranged on an outside of the first end face in at least the at least one end cap, the recess extending in the axial direction. At least one coding element is arranged on a circumference of the at least one end cap. At least one coding pin is arranged on an inside of a bottom housing part of the housing, the coding pin being configured for cooperating with the recess when the filter element is inserted in the housing. The bottom housing part comprises a circular shield in a coaxial arrangement with the filter element, the shield comprising a slot extending in the axial direction, wherein the slot is configured to receive the coding element of the filter element when the filter element is inserted in the housing, wherein, with respect to the axial direction each, a first angle between an angular position of the coding element of the filter element and an angular position of the recess matches a second angle between an angular position of the slot of the bottom housing part and an angular position of the coding pin.

Advantageously, in a hollow cylinder-like filter element, a recess may be provided radially on the outside of the end face of the filter element. The recess advantageously may be wedge-shaped. The recess may advantageously penetrate the seal and/or the end plate in the axial direction, and potentially also partially the filter bellows. In case of a penetration of the seal, the penetration is preferably partially such that a distance between penetration and sealing surface remains. The end cap may be fitted with a circumferential ring in the form of a crown, which consists of a large number of individual, preferably uniformly spaced individual prongs or serrations. The contour of the serrations may be designed in such a way that a separate coding element, e.g. a radially protruding cam, can be detachably or non-detachably connected to the crown, e.g. by a snap-in connection. Depending on the prong on which the coding element is mounted, there is a defined angle between an angular position of the recess and the coding element. The number of available prongs thus results in the number of coding variants.

Advantageously, on the inside of the bottom housing part, a coding element, preferably a coding pin, is mounted, whose design and size are matching and form-fitting to the recess in the filter element. The coding pin preferably is a separate component and can preferably be mounted on a predefined location at any angular position, e.g. by ultrasonic welding forming a welded joint. In addition, the bottom housing part has a circumferentially in the axial direction upstanding shield, with a defined distance to the outer diameter of the filter element. In this shield there is a vertical slot, matching the coding element of the filter element. Depending on the bolt position at which the coding element is attached on, there is a defined angle between the coding element and the shield slot.

If the angle between the coding element and the recess, as well as between the coding pin and the shield slot, is the same, the filter element can be inserted into the bottom housing part. If the angles are different, mounting of the filter element is no longer possible. A change of the coding angle creates a new filter variant.

**In** contrast to state of the art, the coding, i.e. the interface between the housing of the filter system and the end cap of the filter element is not located radially centered, but on the outside of the filter element, and the contour of the interface is not rotationally symmetrical. A further difference is that the coding engages not only in the seal and end cap, but also in the filter body.

Advantageously, the coding comprises at least two spatially separated elements at a defined angle on the outside of the filter element. Thus, a multitude of variants of the filter system and the filter element may be coded as separate variants.

Thus, lower overall costs for the simultaneous provision of many variants may be achieved by avoiding the need for a tooling effort, as no interchangeable inserts, no changeover, no tool change is needed.

Due to the exchangeable coding elements as coding element and coding pin, many different variants can be manufactured with the same tools and the same components.

By using different coding elements in design, size, etc., the number of coding variants can be increased many times over.

Small quantities of filter systems can be manufactured in connection with many possible variants without large production effort. Short delivery time to customers for new variants is achievable, because always the same single parts are used and therefore a high stock level is no problem for the production plant.

Advantageously, differently coded filter elements and housings based on the same filter element and filter housing design can be provided without the need for expensive tool changes after start of production of the market product.

Complexity in the production process does not increase with increasing number of filter variants.

Advantageously, there is less risk of assembling the wrong part for a specific variant during the production chain since the variant is not created until the last production step.

There is less effort and costs for development, warehousing, and logistics, because each new variant still may remain the same product, concerning numbers, parts lists, etc., and may differ only by a different coding angle.

Favorably, a bolt circle may be arranged in the bottom housing part, at least partly circumferentially around the axial direction, for accommodating the coding pin at the bottom housing part. Thus, the coding pin may advantageously be arranged on a defined angular position for coding the bottom housing part accordingly.

Favorably, the at least one coding pin may be non-detachably connected to the bottom housing part, in particular by welding or gluing. Additionally or alternatively, the at least one coding pin may form an integral part of the bottom housing part. By this way the variant of the filter system is fixed which excludes failures in mounting wrong filter elements in the housing of the filter system.

Favorably, the recess of the filter element may be at least partly extending into the filter bellows. In particular, the recess in the filter bellows may be formed by cutting the filter bellows, in particular by laser cutting the filter bellows, or by spreading pleats of the filter bellows. Thus, reliable coding of the filter element may advantageously be achieved. Despite, aligning of the filter element during the mounting process in the housing may be facilitated.

Favorably, the at least one coding element may be non-detachably connected to the end cap. Additionally or alternatively, the at least one coding element may form an integral part of the at least one end cap. Advantageously, the coding element is fixed to the filter element such that it may not be loosened or be lost during handling of the filter element in stocks or during shipping for maintenance.

Favorably, in embodiments of the filter system, an at least partially circumferential ring may be arranged at the at least one end cap, the circumferential ring providing a multitude of fixation elements, in particular of preferably uniformly spaced individual fixation elements, for accommodating the at least one coding element at the at least one end cap. In particular, the at least one coding element may be connected to the fixation elements of the circumferential ring by a snap-in connection. By this way, advantageously, defined angular positions of the coding element on the circumference of the filter element may be arranged ensuring a proper encoding of the filter element.

Favorably, the at least partially circumferential ring may form an integral part of a center pipe of the filter element. Thus, ease of production of the filter element may be achieved with low costs. Less processes are necessary for mounting the filter element. However, also other options are possible, like a detachable or non-detachable connection between the at least partially circumferential ring and a center pipe of the filter element or the at least partially circumferential ring and a center pipe of the filter element being unconnected, separate parts.

Favorably, the at least partially circumferential ring is molded into at least one end cap, wherein preferably the center pipe is molded into the same end cap as well.

Favorably, the at least one coding element may form an integral part of a center pipe of the filter element. Thus, ease of production of the filter element may be achieved with low costs. Less processes are necessary for mounting the filter element.

According to a further aspect of the invention, a filter element is proposed, comprising a filter bellows with a first end face and along an axial direction an opposite second end face, wherein at least one of the end faces comprises an open end cap. The filter element is adapted to be used in a filter system according to the first aspect of the invention. A recess is arranged on an outside of the first end face in at least the at least one end cap, the recess extending in the axial direction, for cooperating with a coding pin of a housing of a filter system in an intended use. At least one coding element is arranged at an outer circumference of the at least one end cap, for cooperating with a slot of a circular shield of a bottom housing part of a filter system in an intended use, wherein, with respect to the axial direction each, a first angle between an angular position of the coding element of the filter element and an angular position of the recess matches a second angle between an angular position of the slot of the bottom housing part and an angular position of a coding pin of the filter system. The coding element is arranged with a, preferably predetermined, spacing along the axial direction from the first end face. The coding element can in particular have a total extension in the axial direction that is significantly smaller than an extension of the filter bellows along the axial direction.

In embodiments the coding element can be arranged at an outer shell surface of the filter bellows.

In embodiments the coding element can be arranged with a predetermined spacing along the axial direction from a free end of the first end cap.

"Open end cap" herein means an end body that has at least one opening, in particular a central opening, that allows fluid to be cleaned to the filter bellows or cleaned fluid to be supplied from the filter bellows, in particular to an inner hollow space that the filter bellows at least partially surrounds.

Advantageously, in a hollow cylinder-like filter element, a preferably wedge-shaped recess is provided radially on the outside of the end face of the filter element, which advantageously penetrates the seal and/or end plate in the axial direction, and potentially also partially the filter bellows. In case of a penetration of the seal, the penetration is preferably partially such that a distance between penetration and sealing surface remains. The end cap may be fitted with a circumferential ring in the form of a crown, which consists of a large number of individual, preferably uniformly spaced individual prongs or serrations. The contour of the serrations may be designed in such a way that a separate coding element, e.g. a radially protruding cam, can be detachably or non-detachably connected to the crown, e.g. by a snap-in connection. Depending on the prong on which the coding element is mounted, there is a defined angle between an angular position of the recess and the coding element. The number of available prongs thus results in the number of coding variants.

The proposed filter element may favorably be used in a filter system as described above, ensuring a defined coding between the filter element and the housing of the filter system.

Advantageously, the coding comprises two spatially separated elements, as the recess and the coding element of the filter element, at a defined angle on the outside of the filter element. Thus, a multitude of variants of the filter system and the filter element may be coded as separate variants.

The recess of the filter element extends at least partly into the filter bellows. In particular, the recess in the filter bellows may be formed by cutting the filter bellows, in particular by laser cutting the filter bellows, or by spreading pleats of the filter bellows. Thus, reliable coding of the filter element may advantageously be achieved. Despite, aligning of the filter element during the mounting process in the housing may be facilitated.

Favorably, the at least one coding element may be non-detachably connected to the end cap and/or forms an integral part of the at least one end cap. Advantageously, the coding element is fixed to the filter element and may not be loosened or be lost during handling of the filter element in stocks or during shipping for maintenance.

Favorably, an at least partially circumferential ring may be arranged at the at least one end cap, the circumferential ring providing a multitude of fixation elements, in particular of preferably uniformly spaced individual fixation elements, for accommodating the at least one coding element at the end cap. In particular the at least one coding element may be connected to the fixation elements of the circumferential ring by a snap-in connection. By this way, advantageously, defined angular positions of the coding element on the circumference of the filter element may be arranged ensuring a proper encoding of the filter element.

Favorably, the at least partially circumferential ring may form an integral part of a center pipe of the filter element. Thus, ease of production of the filter element may be achieved with low costs. Less processes are necessary for mounting the filter element. However, also other options are possible, like a detachable or non-detachable connection between the at least partially circumferential ring and a center pipe of the filter element or the at least partially circumferential ring and a center pipe of the filter element being unconnected, separate parts.

Favorably, the at least one coding element may form an integral part of a center pipe of the filter element. Thus, ease of production of the filter element may be achieved with low costs. Less processes are necessary for mounting the filter element

### Brief Description of the Drawings

Further advantages result from the following drawing description. Embodiments of the invention are shown in the drawings. The drawings, the description, and the claims contain numerous features in combination. The person skilled in the art will expediently also consider the features individually and combine them into sensible further combinations. For example,
- Fig. 1: shows an isometric exploded view of a filter system according to an embodiment of the invention;
- Fig. 2: shows another isometric exploded view of the filter system according to Figure 1;
- Fig. 3: shows an isometric view of a filter element according to an embodiment of the invention;
- Fig. 4: shows an isometric view of a coding element of the filter element;
- Fig. 5: shows an isometric view of a bottom housing part of the filter system according to Figure 1;
- Fig. 6: shows an isometric view of a coding pin of the bottom housing part of the filter system;
- Fig. 7: shows a side view of the filter system according to Figure 1 with an intersection plane A-A marked;
- Fig. 8: shows a top view of the filter system in the intersection plane A-A with an intersection plane C-C marked;
- Fig. 9: shows another top view of the filter system; and
- Fig. 10: shows a side view of the filter system in the intersection plane C-C.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

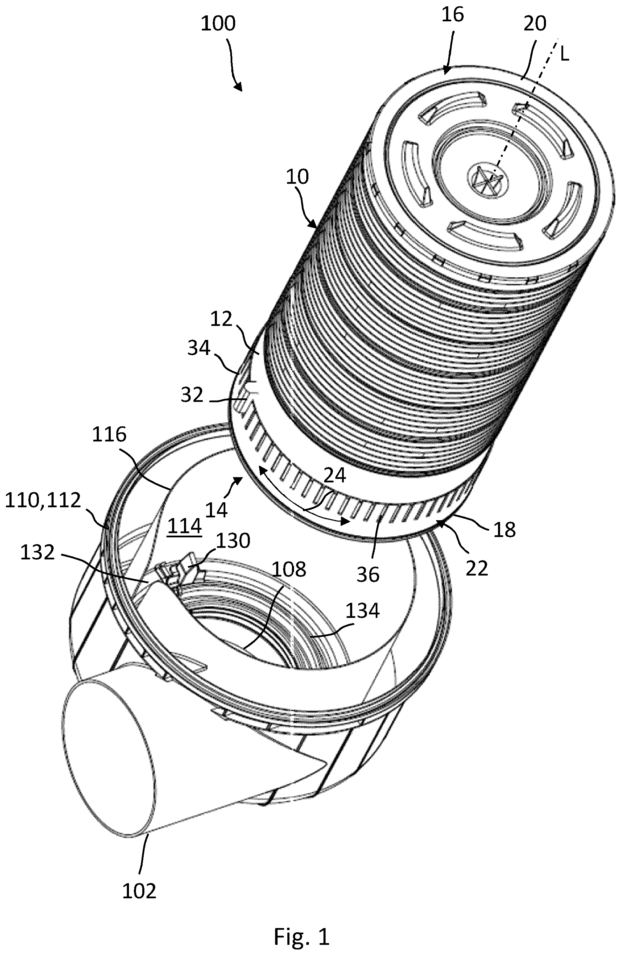

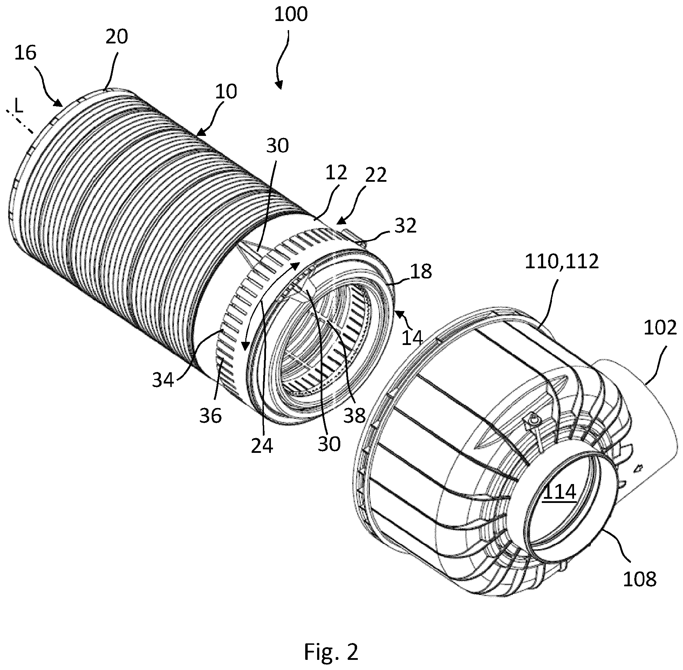

Figure 1 and Figure 2 show two isometric exploded views of a filter system 100 according to an embodiment of the invention, in two different perspectives. The filter system 100 may particularly be used for air filtering, e.g. in industrial applications.

The filter system 100 comprises a housing 110 with a fluid inlet 102 and a fluid outlet 108. Only a bottom housing part 112 is shown, where the fluid inlet 102 and the fluid outlet 108 may be located. An upper housing part for tightly closing the housing 110 is omitted. The filter system 100 further comprises a filter element 10 being accommodated in the housing 110 along an axial direction L for filtering a fluid, typically air, flowing from the fluid inlet 102 to the fluid outlet 108.

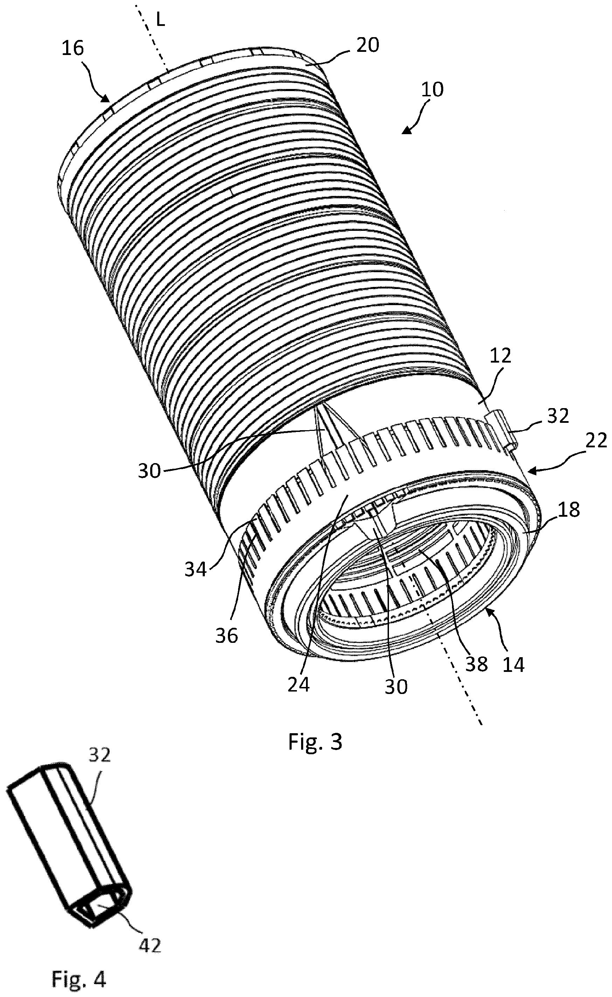

Figure 3 shows an isometric view of a filter element 10 according to an embodiment of the invention.

The filter element 10 comprises a filter bellows 12 with a first end face 14 and along the axial direction L an opposite second end face 16. Both end faces 14, 16 comprise an end cap 18, 20 for a stable mounting and sealing in the housing 110. The end caps 18, 20 typically may be manufactured from preferably foamed polyurethane (PUR) material or other sealing material, preferably an elastomer. The filter bellows 12 typically may be manufactured from a pleated filter medium.

As is to be seen in Figure 3, a recess 30 is arranged on an outside 22 of the first end face 14 in the first end cap 18, which is an open end cap 18, the recess 30 extending in the axial direction L. The recess 30 of the filter element 10 is partly extending into the filter bellows 12. In particular, the recess 30 in the filter bellows 12 may be formed by cutting the filter bellows 12, in particular by laser cutting the filter bellows 12. Alternatively, the recess 30 may be formed by spreading pleats of the filter bellows 12.

A coding element 32 is arranged on an outer circumference 24 of the open end cap 18. The coding element 32 is arranged with a predetermined spacing along the axial direction L from the first end face 14. The spacing between a proximal end of the coding element 32 that faces the first end face 14 and the first end face 14 may, for example, range between 5% and 25% of a total length of the filter bellows 12 in the axial direction L, in particular 7% and 15% of a total length of the filter bellows 12 in the axial direction L.

For this purpose, an at least partially circumferential ring 34 is arranged at the end cap 18. The circumferential ring 34 provides a multitude of fixation elements 36, in particular of preferably uniformly spaced individual fixation elements 36, for accommodating the coding element 32 at the end cap 18. In particular, the coding element 32 may be connected to the fixation elements 36 of the circumferential ring 34, for example by a snap-in connection.

In another embodiment the at least partially circumferential ring 34 may form an integral part of a center pipe 38 of the filter element 10. The center pipe 38 supporting the filter bellows 12 is located on an inside of the filter element 10 and is to be seen in Figures 2 and 3.

Figure 4 shows an isometric view of the coding element 32 of the filter element 10. The coding element 32 is provided with an opening 42 for mounting the coding element 32 on the fixation elements 36 of the circumferential ring 34. The coding element 32 may be non-detachably fixed on the fixation element 36 by welding or gluing. Snap-in connection may also be possible.

The coding element 32 may be non-detachably connected to the end cap 18, 20.

In an alternative embodiment the coding element 32 may directly form an integral part of the end cap 18.

In a further alternative embodiment the coding element 32 may directly form an integral part of the center pipe 38 of the filter element 10.

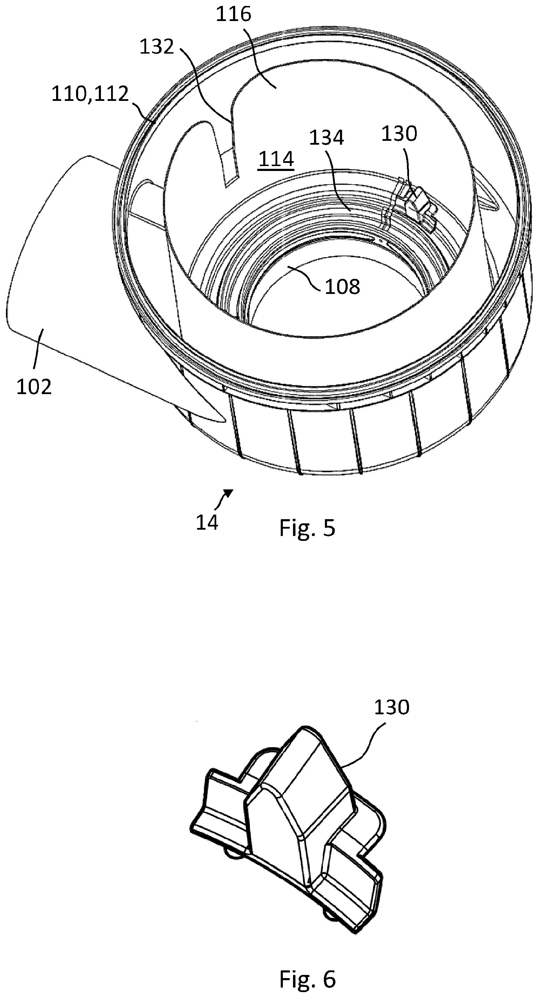

Figure 5 shows an isometric view of a bottom housing part 112 of the filter system 100 according to Figure 1.

A coding pin 130 is arranged on an inside 114 of the bottom housing part 112 of the housing 110. The coding pin 130 is configured for cooperating with the recess 30 when the filter element 10 is inserted in the housing 110.

A bolt circle 134 may be arranged in the bottom housing part 112, at least partly circumferentially around the axial direction L, for accommodating the coding pin 130 at the bottom housing part 112.

Figure 6 shows an isometric view of the coding pin 130. The coding pin 130 may favorably be non-detachably connected to the bottom housing part 112, in particular by welding or gluing.

In an alternative embodiment the coding pin 130 may form an integral part of the bottom housing part 112.

As is to be seen in the Figures 1 and 5, the bottom housing part 112 further comprises a circular shield 116 in a coaxial arrangement with the filter element 10. The shield 116 is used for protection of the filter bellows 12 from e.g. particles in the fluid entering from the fluid inlet 102.

The shield 116 in the embodiment shown comprises a slot 132 extending in the axial direction L. The slot 132 is configured to receive the coding element 32 of the filter element 10 when the filter element 10 is inserted in the housing 110.

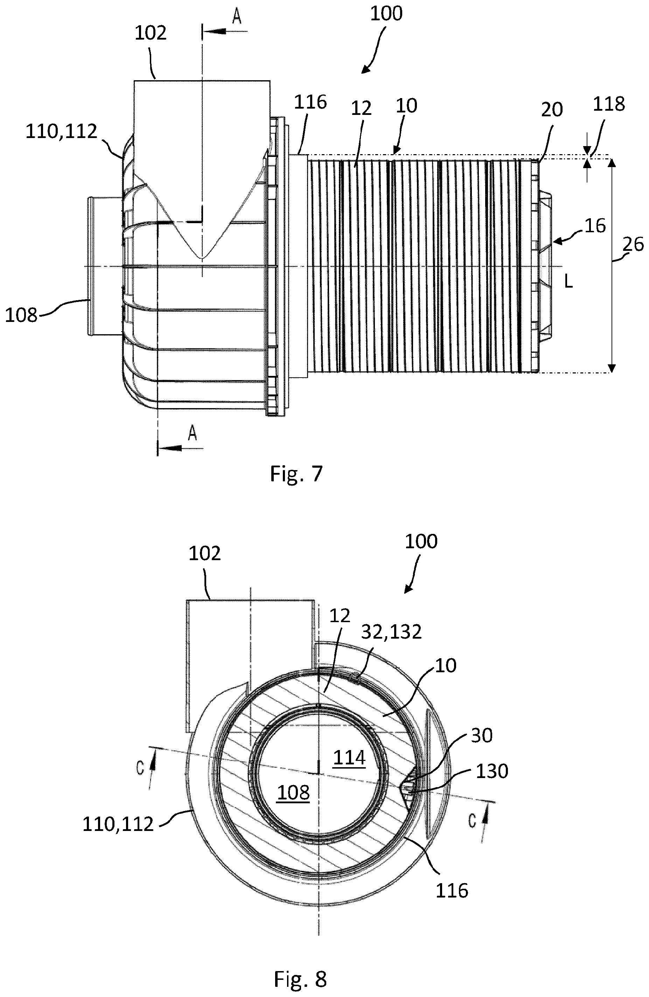

Figure 7 shows a side view of the filter system 100 according to Figure 1 with an intersection plane A-A marked.

In the side view in Figure 7 the filter element 10 is mounted in an intended position in the bottom housing part 112. In this view the distance 118 between the shield 116 and the diameter 26 of the filter element 10 is marked.

Figure 8 shows a top view of the filter system 100 in the intersection plane A-A of Figure 7 with an intersection plane C-C marked.

In the top view the cooperation of the coding element 32 at the filter element 10 and the slot 132 of the shield 116 of the bottom housing part 112 as well as of the coding pin 130 of the bottom housing part 112 and the recess 30 in the filter element 10 is clearly to be seen when the filter element 10 is in its intended position in the bottom housing part 112.

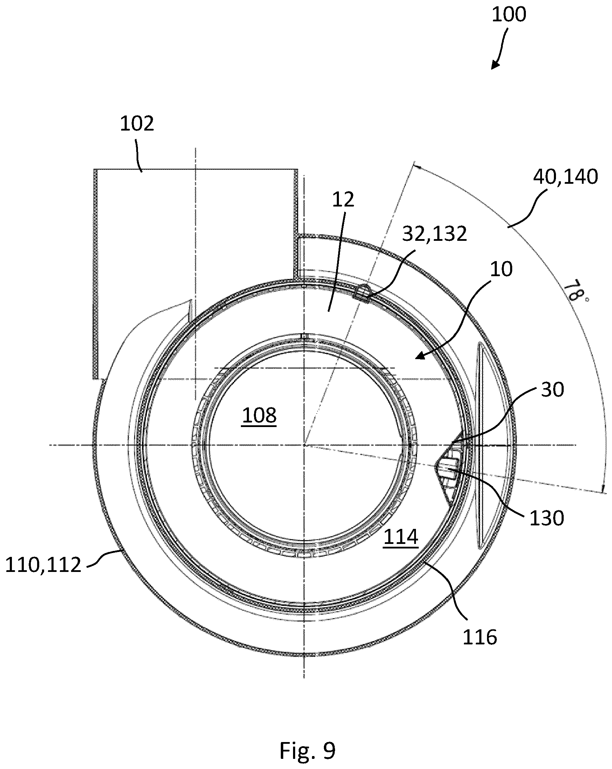

This cooperation is focused in Figure 9 where another top view of the filter system 100 is shown. Here it is to be seen, that, with respect to the axial direction L each, a first angle 40 between an angular position of the coding element 32 of the filter element 10 and an angular position of the recess 30 matches a second angle 140 between an angular position of the slot 132 of the bottom housing part 112 and an angular position of the coding pin 130. This matching is a requirement that the filter element 10 with defined recess 30 and coding element 32 can be inserted into the bottom housing part 112 with defined coding pin 130 and slot 132 in a correct position.

If an angle 40 between the coding element 32 and the recess 30, as well as between the coding pin 130 and the shield slot 132, is the same, the filter element 10 can be inserted into the bottom housing part 112. If the angles 40, 140 are different, mounting of the filter element 10 is no longer possible. A change of the coding angle 40, 140 creates a new filter variant.

In the embodiment shown angles 40, 140 of 78° are chosen between the coding element 32 and the recess 30, as well as between the coding pin 130 and the shield slot 132, respectively.

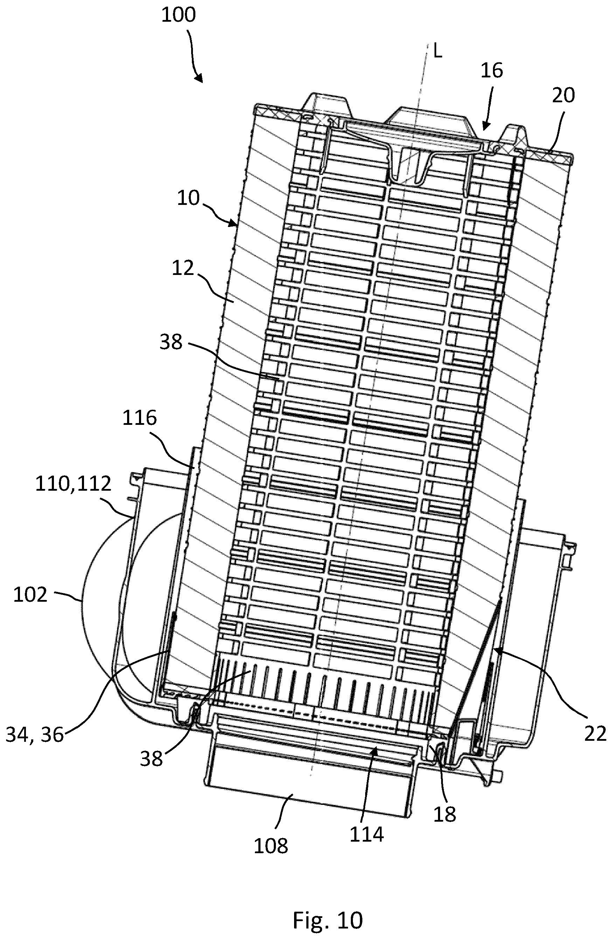

Figure 10 shows a side view of the filter system 100 in the intersection plane C-C of Figure 8. In this view the mounting of the filter element 10 at the bottom of the bottom housing part 112 is to be seen when the filter element 10 is in a final position in the housing 110 for an intended use of the filter system 100 when the housing 110 is closed by an upper housing part which is not shown.

### Reference numerals

- 10: filter element
- 12: filter bellows
- 14: end face
- 16: end face
- 18: end cap
- 20: end cap
- 22: outside
- 24: circumference
- 26: diameter
- 30: recess
- 32: coding element
- 34: ring
- 36: fixation element
- 38: center pipe
- 40: first angle
- 42: opening
- 100: filter system
- 102: fluid inlet
- 108: fluid outlet
- 110: housing
- 112: bottom housing part
- 114: inside
- 116: circular shield
- 118: distance
- 130: coding pin
- 132: slot
- 134: bolt circle
- 140: second angle
- L: axial direction

## Claims

1. A filter system (100) comprising a housing (110) with a fluid inlet (102) and a fluid outlet (108) and a filter element (10) being accommodated in the housing (110) along an axial direction (L) for filtering a fluid flowing from the fluid inlet (102) to the fluid outlet (108),
the filter element (10) comprising a filter bellows (12) with a first end face (14) and along the axial direction (L) an opposite second end face (16), wherein at least one of the end faces (14, 16) comprises an end cap (18, 20),
wherein a recess (30) is arranged on an outside (22) of the first end face (14) in at least the at least one end cap (18, 20), the recess (30) extending in the axial direction (L),
wherein at least one coding element (32) is arranged on a circumference (24) of the at least one end cap (18, 20),
wherein at least one coding pin (130) is arranged on an inside (114) of a bottom housing part (112) of the housing (110), the coding pin (130) being configured for cooperating with the recess (30) when the filter element (10) is inserted in the housing (110),
wherein the bottom housing part (112) comprises a circular shield (116) in a coaxial arrangement with the filter element (10), the shield (116) comprising a slot (132) extending in the axial direction (L), wherein the slot (132) is configured to receive the coding element (32) of the filter element (10) when the filter element (10) is inserted in the housing (110),
wherein, with respect to the axial direction (L) each, a first angle (40) between an angular position of the coding element (32) of the filter element (10) and an angular position of the recess (30) matches a second angle (140) between an angular position of the slot (132) of the bottom housing part (112) and an angular position of the coding pin (130).

2. The filter system according to claim 1, wherein a bolt circle (134) is arranged in the bottom housing part (112), at least partly circumferentially around the axial direction (L), for accommodating the coding pin (130) at the bottom housing part (112).

3. The filter system according to claim 1 or 2, wherein the at least one coding pin (130) is non-detachably connected to the bottom housing part (112), in particular by welding or gluing, and/or the at least one coding pin (130) forms an integral part of the bottom housing part (112).

4. The filter system according to any one of the preceding claims, wherein the recess (30) of the filter element (10) is at least partly extending into the filter bellows (12), in particular, wherein the recess (30) in the filter bellows (12) is formed by cutting the filter bellows (12), in particular by laser cutting the filter bellows (12), or by spreading pleats of the filter bellows (12).

5. The filter system according to any one of the preceding claims, wherein the at least one coding element (32) is non-detachably connected to the end cap (18, 20) and/or forms an integral part of the at least one end cap (18, 20).

6. The filter system according to any one of the preceding claims, wherein an at least partially circumferential ring (34) is arranged at the at least one end cap (18, 20), the circumferential ring (34) providing a multitude of fixation elements (36), in particular of preferably uniformly spaced individual fixation elements (36), for accommodating the at least one coding element (32) at the at least one end cap (18, 20), in particular, wherein the at least one coding element (32) is connected to the fixation elements (36) of the circumferential ring (34) by a snap-in connection.

7. The filter system according to claim 6, wherein the at least partially circumferential ring (34) forms an integral part of a center pipe (38) of the filter element (10).

8. The filter system according to any one of the preceding claims, wherein the at least one coding element (32) forms an integral part of a center pipe (38) of the filter element (10) or the at least partially circumferential ring (34).

9. A filter element (10) for a filter system (100) according to any one of the preceding claims, comprising a filter bellows (12) with a first end face (14) and along an axial direction (L) an opposite second end face (16), wherein at least one of the end faces (14, 16) comprises an open end cap (18, 20),
wherein at least one recess (30) is arranged on an outside (22) of the first end face (14) in at least the at least one end cap (18, 20), the recess (30) extending in the axial direction (L), for cooperating with a coding pin (130) of a housing (110) of the filter system (100) in an intended use,
wherein at least one coding element (32) is arranged at an outer circumference (24) of the at least one end cap (18, 20), for cooperating with a slot (132) of a circular shield (116) of a bottom housing part (112) of the filter system (100) in an intended use, wherein the coding element (32) is arranged with a spacing along the axial direction (L) from the first end face (14),
and wherein, with respect to the axial direction (L) each, a first angle (40) between an angular position of the coding element (32) of the filter element (10) and an angular position of the recess (30) matches a second angle (140) between an angular position of the slot (132) of the bottom housing part (112) and an angular position of a coding pin (130) of the filter system (100), wherein the recess (30) of the filter element (10) is at least partly extending into the filter bellows (12).

10. The filter element according to claim 9, wherein the recess (30) in the filter bellows (12) is formed by cutting the filter bellows (12), in particular by laser cutting the filter bellows (12), or by spreading pleats of the filter bellows (12).

11. The filter element according to any one of the claims 9 to 10, wherein the at least one coding element (32) is non-detachably connected to the end cap (18, 20) and/or forms an integral part of the at least one end cap (18, 20).

12. The filter element according to any one of the claims 9 to 11, wherein an at least partially circumferential ring (34) is arranged at the at least one end cap (18, 20), the circumferential ring (34) providing a multitude of fixation elements (36), in particular of preferably uniformly spaced individual fixation elements (36), for accommodating the at least one coding element (32) at the end cap (18, 20), in particular wherein the at least one coding element (32) is connected to the fixation elements (36) of the circumferential ring (34) by a snap-in connection.

13. The filter element according to claim 12, wherein the at least partially circumferential ring (34) forms an integral part of a center pipe (38) of the filter element (10).

14. The filter element according to any one of the claims 9 to 13, wherein the at least one coding element (32) forms an integral part of a center pipe (38) of the filter element (10) or of the at least partially circumferential ring (34).

## Patentansprüche

1. Filtersystem (100), umfassend ein Gehäuse (110) mit einem Fluideinlass (102) und einem Fluidauslass (108) und ein Filterelement (10), das entlang einer Achsrichtung (L) in dem Gehäuse (110) aufgenommen ist, um ein Fluid zu filtern, das von dem Fluideinlass (102) zu dem Fluidauslass (108) strömt, wobei das Filterelement (10) einen Filterbalg (12) mit einer ersten Stirnfläche (14) und entlang der Achsrichtung (L) einer gegenüberliegenden zweiten Stirnfläche (16) umfasst, wobei mindestens eine der Stirnflächen (14, 16) eine Endkappe (18, 20) umfasst,
wobei an einer Außenseite (22) der ersten Stirnfläche (14) in mindestens einer der mindestens einen Endkappe (18, 20) eine Aussparung (30) angeordnet ist, wobei die Aussparung (30) sich in Achsrichtung (L) erstreckt,
wobei mindestens ein Kodierelement (32) an einem Umfang (24) der mindestens einen Endkappe (18, 20) angeordnet ist,
wobei mindestens ein Kodierstift (130) an einer Innenseite (114) eines unteren Gehäuseteils (112) des Gehäuses (110) angeordnet ist, wobei der Kodierstift (130) so konfiguriert ist, dass er mit der Aussparung (30) zusammenwirkt, wenn das Filterelement (10) in das Gehäuse (110) eingesetzt ist,
wobei das untere Gehäuseteil (112) eine kreisförmige Abschirmung (116) in koaxialer Anordnung zum Filterelement (10) umfasst, wobei die Abschirmung (116) einen sich in Achsrichtung (L) erstreckenden Schlitz (132) umfasst, wobei der Schlitz (132) so konfiguriert ist, dass er das Kodierelement (32) des Filterelements (10) aufnimmt, wenn das Filterelement (10) in das Gehäuse (110) eingesetzt wird,
wobei bezüglich der jeweiligen Achsrichtung (L) ein erster Winkel (40) zwischen einer Winkelstellung des Kodierelements (32) des Filterelements (10) und einer Winkelstellung der Aussparung (30) mit einem zweiten Winkel (140) zwischen einer Winkelstellung des Schlitzes (132) des unteren Gehäuseteils (112) und einer Winkelstellung des Kodierstifts (130) übereinstimmt.

2. Filtersystem nach Anspruch 1, wobei im unteren Gehäuseteil (112) zumindest teilweise umfänglich um die Achsrichtung (L) herum ein Lochkreis (134) zur Aufnahme des Kodierstifts (130) am unteren Gehäuseteil (112) angeordnet ist.

3. Filtersystem nach Anspruch 1 oder 2, wobei der mindestens eine Kodierstift (130) unlösbar mit dem unteren Gehäuseteil (112) verbunden ist, insbesondere durch Schweißen oder Kleben, und/oder der mindestens eine Kodierstift (130) einen integralen Bestandteil des unteren Gehäuseteils (112) bildet.

4. Filtersystem nach einem der vorhergehenden Ansprüche, wobei sich die Aussparung (30) des Filterelements (10) zumindest teilweise in den Filterbalg (12) erstreckt, insbesondere wobei die Aussparung (30) im Filterbalg (12) durch Schneiden des Filterbalgs (12), insbesondere durch Laserschneiden des Filterbalgs (12), oder durch Aufspreizen von Falten des Filterbalgs (12) gebildet ist.

5. Filtersystem nach einem der vorhergehenden Ansprüche, wobei das mindestens eine Kodierelement (32) unlösbar mit der Endkappe (18, 20) verbunden ist und/oder einen integralen Bestandteil der mindestens einen Endkappe (18, 20) bildet.

6. Filtersystem nach einem der vorhergehenden Ansprüche, wobei an der mindestens einen Endkappe (18, 20) ein zumindest teilumfänglicher Ring (34) angeordnet ist, wobei der Umfangsring (34) eine Vielzahl von Befestigungselementen (36) vorsieht, insbesondere vorzugsweise gleichmäßig beabstandete einzelne Befestigungselemente (36), zur Aufnahme des mindestens einen Kodierelements (32) an der mindestens einen Endkappe (18, 20), wobei insbesondere das mindestens eine Kodierelement (32) mit den Befestigungselementen (36) des Umfangsrings (34) durch eine Rastverbindung verbunden ist.

7. Filtersystem nach Anspruch 6, wobei der zumindest teilumfängliche Ring (34) einen integralen Bestandteil eines Mittelrohrs (38) des Filterelements (10) bildet.

8. Filtersystem nach einem der vorhergehenden Ansprüche, wobei das mindestens eine Kodierelement (32) einen integralen Bestandteil eines Mittelrohrs (38) des Filterelements (10) oder des mindestens teilumfänglichen Rings (34) bildet.

9. Filterelement (10) für ein Filtersystem (100) nach einem der vorhergehenden Ansprüche, umfassend einen Filterbalg (12) mit einer ersten Stirnfläche (14) und entlang einer Achsrichtung (L) eine gegenüberliegende zweite Stirnfläche (16), wobei mindestens eine der Stirnflächen (14, 16) eine offene Endkappe (18, 20) umfasst,
wobei mindestens eine Aussparung (30) an einer Außenseite (22) der ersten Stirnfläche (14) in mindestens der mindestens einen Endkappe (18, 20) angeordnet ist, wobei sich die Aussparung (30) in Achsrichtung (L) erstreckt, um bei bestimmungsgemäßer Verwendung mit einem Kodierstift (130) eines Gehäuses (110) des Filtersystems (100) zusammenzuwirken,
wobei mindestens ein Kodierelement (32) an einem Außenumfang (24) der mindestens einen Endkappe (18, 20) angeordnet ist, um bei bestimmungsgemäßer Verwendung mit einem Schlitz (132) einer kreisförmigen Abschirmung (116) eines unteren Gehäuseteils (112) des Filtersystems (100) zusammenzuwirken, wobei das Kodierelement (32) in einem Abstand entlang der Achsrichtung (L) von der ersten Stirnfläche (14) angeordnet ist,
und wobei bezüglich der jeweiligen Achsrichtung (L) ein erster Winkel (40) zwischen einer Winkelstellung des Kodierelements (32) des Filterelements (10) und einer Winkelstellung der Aussparung (30) mit einem zweiten Winkel (140) zwischen einer Winkelstellung des Schlitzes (132) des unteren Gehäuseteils (112) und einer Winkelstellung eines Kodierstifts (130) des Filtersystems (100) übereinstimmt, wobei die Aussparung (30) des Filterelements (10) zumindest teilweise in den Filterbalg (12) hineinragt.

10. Filterelement nach Anspruch 9, wobei die Aussparung (30) im Filterbalg (12) durch Schneiden des Filterbalgs (12), insbesondere durch Laserschneiden des Filterbalgs (12), oder durch Aufspreizen von Falten des Filterbalgs (12) gebildet ist.

11. Filterelement nach einem der Ansprüche 9 bis 10, wobei das mindestens eine Kodierelement (32) unlösbar mit der Endkappe (18, 20) verbunden ist und/oder einen integralen Bestandteil der mindestens einen Endkappe (18, 20) bildet.

12. Filterelement nach einem der Ansprüche 9 bis 11, wobei an der mindestens einen Endkappe (18, 20) ein zumindest teilumfänglicher Ring (34) angeordnet ist, wobei der Umfangsring (34) eine Vielzahl von Befestigungselementen (36) vorsieht, insbesondere vorzugsweise gleichmäßig beabstandete einzelne Befestigungselemente (36), zur Aufnahme des mindestens einen Kodierelements (32) an der mindestens einen Endkappe (18, 20), wobei insbesondere das mindestens eine Kodierelement (32) mit den Befestigungselementen (36) des Umfangsrings (34) durch eine Rastverbindung verbunden ist.

13. Filterelement nach Anspruch 12, wobei der zumindest teilumfängliche Ring (34) einen integralen Bestandteil eines Mittelrohrs (38) des Filterelements (10) bildet.

14. Filterelement nach einem der Ansprüche 9 bis 13, wobei das mindestens eine Kodierelement (32) einen integralen Bestandteil eines Mittelrohrs (38) des Filterelements (10) oder des mindestens teilumfänglichen Rings (34) bildet.

## Revendications

1. Système de filtre (100) comprenant un boîtier (110) avec une entrée de fluide (102) et une sortie de fluide (108) et un élément de filtre (10) étant reçu dans le boîtier (110) le long d'une direction axiale (L), destiné à filtrer un fluide s'écoulant de l'entrée de fluide (102) à la sortie de fluide (108),
l'élément de filtre (10) comprenant un soufflet de filtre (12) avec une première face d'extrémité (14) et le long de la direction axiale (L) une seconde face d'extrémité (16) opposée, dans lequel au moins l'une des faces d'extrémités (14, 16) comprend un bouchon d'extrémité (18, 20),
dans lequel un évidement (30) est agencé sur un extérieur (22) de la première face d'extrémité (14) au moins dans un bouchon d'extrémité (18, 20), au moins au nombre d'un, l'évidement (30) s'étendant dans la direction axiale (L),
dans lequel au moins un élément de codage (32) est agencé sur une circonférence (24) du bouchon d'extrémité (18, 20), au moins au nombre d'un, dans lequel au moins une broche de codage (130) est agencée sur un intérieur (114) d'une partie inférieure de boîtier (112) du boîtier (110), la broche de codage (130) étant conçue pour coopérer avec l'évidement (30) lorsque l'élément de filtre (10) est inséré dans le boîtier (110),
dans lequel la partie inférieure de boîtier (112) comprend un bouclier (116) circulaire dans un agencement coaxial avec l'élément de filtre (10), le bouclier (116) comprenant une fente (132) s'étendant dans la direction axiale (L), dans lequel la fente (132) est conçue pour recevoir l'élément de codage (32) de l'élément de filtre (10) lorsque l'élément de filtre (10) est inséré dans le boîtier (110),
dans lequel, par rapport à la direction axiale (L) respective, un premier angle (40) entre une position angulaire de l'élément de codage (32) de l'élément de filtre (10) et une position angulaire de l'évidement (30) concorde avec un second angle (140) entre une position angulaire de la fente (132) de la partie inférieure de boîtier (112) et une position angulaire de la broche de codage (130).

2. Système de filtre selon la revendication 1, dans lequel un cercle de trous (134) est agencé dans la partie inférieure de boîtier (112), au moins de façon partiellement circonférentielle autour de la direction axiale (L), pour recevoir la broche de codage (130) au niveau de la partie inférieure de boîtier (112).

3. Système de filtre selon la revendication 1 ou 2, dans lequel la broche de codage (130), au moins au nombre d'une, est reliée de façon non détachable à la partie inférieure de boîtier (112), en particulier par soudage ou collage, et/ou la broche de codage (130), au moins au nombre d'une, forme une partie intégrante de la partie inférieure de boîtier (112).

4. Système de filtre selon l'une quelconque des revendications précédentes, dans lequel l'évidement (30) de l'élément de filtre (10) s'étend au moins partiellement dans le soufflet de filtre (12), en particulier, dans lequel l'évidement (30) dans le soufflet de filtre (12) est formé par découpe du soufflet de filtre (12), en particulier par découpe laser du soufflet de filtre (12), ou par étalement de plis du soufflet de filtre (12).

5. Système de filtre selon l'une quelconque des revendications précédentes, dans lequel l'élément de codage (32), au moins au nombre d'un, est relié de façon non détachable au bouchon d'extrémité (18, 20) et/ou forme une partie intégrante du bouchon d'extrémité (18, 20), au moins au nombre d'un.

6. Système de filtre selon l'une quelconque des revendications précédentes, dans lequel un anneau au moins partiellement circonférentiel (34) est agencé au niveau du bouchon d'extrémité (18, 20), au moins au nombre d'un, l'anneau circonférentiel (34) fournissant une multitude d'éléments de fixation (36), en particulier d'éléments de fixation (36) individuels de préférence espacés uniformément, destinés à recevoir l'élément de codage (32), au moins au nombre d'un, au niveau du bouchon, d'extrémité (18, 20), au moins au nombre d'un, en particulier, dans lequel l'élément de codage (32), au moins au nombre d'un, est relié aux éléments de fixation (36) de l'anneau circonférentiel (34) par une liaison par encliquetage.

7. Système de filtre selon la revendication 6, dans lequel l'anneau au moins partiellement circonférentiel (34) forme une partie intégrante d'un tuyau central (38) de l'élément de filtre (10).

8. Système de filtre selon l'une quelconque des revendications précédentes, dans lequel l'élément de codage (32), au moins au nombre d'un, forme une partie intégrante d'un tuyau central (38) de l'élément de filtre (10) ou de l'anneau au moins partiellement circonférentiel (34).

9. Élément de filtre (10) pour un système de filtre (100) selon l'une quelconque des revendications précédentes, comprenant un soufflet de filtre (12) avec une première face d'extrémité (14) et le long d'une direction axiale (L) une seconde face d'extrémité (16) opposée, dans lequel au moins l'une des faces d'extrémités (14, 16) comprend un bouchon d'extrémité (18, 20) ouvert,
dans lequel au moins un évidement (30) est agencé sur un extérieur (22) de la première face d'extrémité (14) au moins dans le bouchon d'extrémité (18, 20), au moins au nombre d'un, l'évidement (30) s'étendant dans la direction axiale (L), pour coopérer avec une broche de codage (130) d'un boîtier (110) du système de filtre (100) dans une utilisation prévue,
dans lequel au moins un élément de codage (32) est agencé au niveau d'une circonférence externe (24) du bouchon d'extrémité (18, 20), au moins au nombre d'un, pour coopérer avec une fente (132) d'un bouclier (116) circulaire d'une partie inférieure de boîtier (112) du système de filtre (100) dans une utilisation prévue, dans lequel l'élément de codage (32) est agencé avec un espacement le long de la direction axiale (L) à partir de la première face d'extrémité (14),
et dans lequel, par rapport à la direction axiale (L) respective, un premier angle (40) entre une position angulaire de l'élément de codage (32) de l'élément de filtre (10) et une position angulaire de l'évidement (30) concorde avec un second angle (140) entre une position angulaire de la fente (132) de la partie inférieure de boîtier (112) et une position angulaire d'une broche de codage (130) du système de filtre (100), dans lequel l'évidement (30) de l'élément de filtre (10) s'étend au moins partiellement dans le soufflet de filtre (12).

10. Élément de filtre selon la revendication 9, dans lequel l'évidement (30) dans le soufflet de filtre (12) est formé par découpe du soufflet de filtre (12), en particulier par découpe laser du soufflet de filtre (12), ou par étalement de plis du soufflet de filtre (12).

11. Élément de filtre selon l'une quelconque des revendications 9 à 10, dans lequel l'élément de codage (32), au moins au nombre d'un, est relié de façon non détachable au bouchon d'extrémité (18, 20) et/ou forme une partie intégrante du bouchon d'extrémité (18, 20), au moins au nombre d'un.

12. Élément de filtre selon l'une quelconque des revendications 9 à 11, dans lequel un anneau au moins partiellement circonférentiel (34) est agencé au niveau du bouchon d'extrémité (18, 20), au moins au nombre d'un, l'anneau circonférentiel (34) fournissant une multitude d'éléments de fixation (36), en particulier d'éléments de fixation (36) individuels de préférence espacés uniformément, destinés à recevoir l'élément de codage (32), au moins au nombre d'un, au niveau du bouchon d'extrémité (18, 20), en particulier, dans lequel l'élément de codage (32), au moins au nombre d'un, est relié aux éléments de fixation (36) de l'anneau circonférentiel (34) par une liaison par encliquetage.

13. Élément de filtre selon la revendication 12, dans lequel l'anneau au moins partiellement circonférentiel (34) forme une partie intégrante d'un tuyau central (38) de l'élément de filtre (10).

14. Élément de filtre selon l'une quelconque des revendications 9 à 13, dans lequel l'élément de codage (32), au moins au nombre d'un, forme une partie intégrante d'un tuyau central (38) de l'élément de filtre (10) ou de l'anneau au moins partiellement circonférentiel (34).
